# EUROPÄISCHE PATENTSCHRIFT

(11) **EP 4 771 416 B1**
(45) Veröffentlichungstag und Bekanntmachung des Hinweises auf die Patenterteilung: **14.10.2026**
(21) Anmeldenummer: 25717047.2
(22) Anmeldetag: 03.04.2025
(51) Int. Cl.: G01S 7/48, G01S 7/486, G01S 7/497, G01S 17/42, G01S 17/894, G01S 17/931, G01S 7/295, G01S 7/40, G01S 7/41, G01S 7/4912, G01S 13/42, G01S 13/89, G01S 13/931

(54) **DETEKTION VON FALSCH-POSITIVEN PUNKTEN EINER PUNKTEWOLKE EINES AKTIVEN SENSORS**
DETECTION OF FALSE POSITIVE POINTS OF A POINT CLOUD OF AN ACTIVE SENSOR
DÉTECTION DE FAUX POINTS POSITIFS D'UN NUAGE DE POINTS D'UN CAPTEUR ACTIF

(30) Priorität: 03.05.2024 DE 102024001430
(43) Veröffentlichungstag der Anmeldung: 08.07.2026
(73) Patentinhaber: Mercedes-Benz Group AG, 70372 Stuttgart (DE)
(72) Erfinder: FICHTNER, Konstantin, 71063 Sindelfingen (DE)
(74) Vertreter: Novagraaf Group
(86) Internationale Anmeldenummer: PCT/EP2025/059158
(87) Internationale Veröffentlichungsnummer: WO 2025/228614

(56) Entgegenhaltungen:
- DE-A1- 102021 204 319
- US-B2- 9 933 513
- ZHONGYUAN HAU ET AL: "GhostBuster: Looking Into Shadows to Detect Ghost Objects in Autonomous Vehicle 3D Sensing", ARXIV.ORG, CORNELL UNIVERSITY LIBRARY, 201 OLIN LIBRARY CORNELL UNIVERSITY ITHACA, NY 14853, 27 August 2020 (2020-08-27), XP081749581

## Beschreibung

Die Erfindung betrifft ein Verfahren zum Ermitteln von fehlerhaften Sensorergebnissen eines aktiven Sensors in einer Situation, in der vom aktiven Sensor ein erstes Objekt angestrahlt wird und ein durch das erste Objekt zumindest teilweise von der Anstrahlung des aktiven Sensors verdecktes zweites Objekt angestrahlt wird, sowie ein System für ein Fahrzeug zum Ermitteln von fehlerhaften Sensorergebnissen eines aktiven Sensors des Fahrzeugs in einer solchen Situation.

Bei hoch-automatisierten Fahrzeugen wie Personenkraftwagen oder Lastkraftwagen werden typischerweise Umfeldbeobachtungen durch Kamera, Radar und Lidar ausgeführt. Ein Lidar-System sendet Lichtimpulse aus, welche zur Objektdetektion verwendet werden. Dabei kann es durch Verschmutzung wie durch Wassertropfen, Staub oder Salz oder durch Kratzer auf dem Frontcover zu unerwünschten Brechungen und/oder Fokussierungen der zurückgestrahlten Laserleistung und somit zum ungewollten Übersprechverhalten am APD (Abkürzung für "Avalanche Photo Diod")- Empfänger kommen, welcher induzierte und damit virtuelle, das heißt falsch-positive, Scanpunkte kreiert. Die damit verbundenen negativen Effekte werden Blooming und Crosstalk genannt.

Blooming tritt vor allem im Zusammenhang mit hochreflektiven Objekten auf, z.B. bei Warnbaken, Leitpfosten, Straßenschilder. Diese induzierten Scanpunkte können im weiteren Objekttracking zu Verzerrungen der Objektausgabe führen, welche die Fahrstrategie eines Fahrsteuerungssystems des Fahrzeugs behindern könnte. So kann beispielsweise eine deutlichen Verbreiterung in Szenarien wie Baustellendurchfahrten ein falsch verbreitertes Hindernis suggerieren, an dem das Fahrzeug nicht in der eigenen Spur vorbeikommen würde. Crosstalk ist das elektrische Übersprechen des Spannungspegels im APD Empfänger Array. Durch diese Verzerrung der Punktwolke ist es später im Allgemeinen nicht mehr möglich, die tatsächlichen Dimensionen des Objektes im Tracker festzulegen.

Um dieses Verhalten zu verbessern, müssen diese falsch-positiven Punkte sicher erkannt werden, um sie im weiteren Verarbeitungsverlauf nicht zu berücksichtigen.

Die DE 10 2020 128 732 A1 betrifft in diesem Zusammenhang ein Verfahren zum Erkennen von Blooming-Kandidaten in einer Lidarmessung, wobei ein distanzbasiertes Histogramm von Punkten einer in der Lidarmessung erzeugten Punktewolke erstellt wird, in dem Histogramm Häufungen von Punkten mit gleicher Distanz zu einem die Lidarmessung durchführenden Lidarsensor identifiziert werden, Intensitäten der Punkte einer Häufung ausgewertet werden, und dann, wenn die Häufung Punkte enthält, deren Intensitäten einen vorgegebenen Grenzwert jeweils überschreiten, diejenigen Punkte der Häufung, deren Intensitäten den vorgegebenen Grenzwert jeweils nicht überschreiten, insbesondere den vorgegebenen Grenzwert um mehr als einen vorgegebenen Schwellwert unterschreiten, als Blooming-Kandidaten klassifiziert werden.

Die Druckschrift DE 10 2021 204 319 A1 beschreibt ein Verfahren, bei dem optische Beeinträchtigungen, beispielsweise durch Verschmutzung, über die Analyse einer Punktspreizfunktion detektiert und daraufhin eine Reinigungsaktion eingeleitet werden kann.

Die Druckschrift US 9,933,513 B2 offenbart ein adaptives Lidar-System, das bei der Detektion einer Sättigung des Empfängers die Sendeleistung der Laserpulse reduzieren kann, um die Sättigung bei einer erneuten Messung zu vermeiden.

Die wissenschaftliche Veröffentlichung ZHONGYUAN HAU ET AL: "GhostBuster: Looking Into Shadows to Detect Ghost Objects in Autonomous Vehicle 3D Sensing" beschreibt ein Verfahren, um sogenannte Geisterobjekte in 3D-Sensordaten zu erkennen. Dazu wird die Schattenregion hinter einem detektierten Objekt analysiert. Das Verfahren geht davon aus, dass reale Objekte einen Schatten werfen, in dem keine oder nur sehr wenige Messpunkte zu erwarten sind. Werden innerhalb dieser erwarteten Schattenregion unerwartet Punkte detektiert, wird das Objekt als potenziell nicht real, sondern als "Geist" klassifiziert. Der Fokus liegt somit auf der Validierung der Echtheit eines Objekts durch die Analyse von Punkten innerhalb dessen Schattens. Ein Verfahren zur Korrektur der Punktwolke eines als real erkannten Objekts von Artefakten wie Blooming, die außerhalb des eigentlichen Objektkörpers erscheinen, wird nicht beschrieben.

Aufgabe der Erfindung ist es, diese virtuellen Punkte mit erhöhter Konfidenz zu erkennen, um sie in einer Auswertung mitigieren zu können und weiterhin die richtigen Abmessungen eines angestrahlten realen Objekts ermitteln zu können.

Die Erfindung ergibt sich aus den Merkmalen der unabhängigen Ansprüche. Vorteilhafte Weiterbildungen und Ausgestaltungen sind Gegenstand der abhängigen Ansprüche.

Ein erster Aspekt der Erfindung betrifft ein Verfahren zum Ermitteln von fehlerhaften Sensorergebnissen eines aktiven Sensors in einer Situation, in der vom aktiven Sensor ein erstes Objekt angestrahlt wird und ein durch das erste Objekt zumindest teilweise von der Anstrahlung des aktiven Sensors verdecktes zweites Objekt angestrahlt wird, aufweisend die Schritte:
- Ermitteln einer Punktewolke aus am ersten Objekt und am zweiten Objekt auftretenden Reflexionen der vom aktiven Sensor zur Anstrahlung emittierten Signale;
- Bestimmen einer Geometrie eines Schattens in dem zu den Reflexionen am zweiten Objekt zugehörigen Teil der Punktewolke;
   wobei erfindungsgemäß folgende Schritte ausgeführt werden:
- Ermitteln einer Referenzgeometrie auf Basis der Geometrie des Schattens ; und
- Klassifizieren von außerhalb der Referenzgeometrie liegenden Punkten aus dem zu den Reflexionen am ersten Objekt zugehörigen Teil der Punktewolke als virtuelle Punkte, wobei ein Punkt als virtuell klassifiziert wird, wenn
   (i) er außerhalb der Referenzgeometrie liegt, und
   (ii) in derselben Abstrahl-Richtung, in der der Punkt erfasst wurde, eine Reflexion am zweiten Objekt (2) auftritt.

Der aktive Sensor ist bevorzugt ein Lidar-System, kann jedoch auch ein Radar-System oder eine andere Art eines aktiven Sensors sein. Kennzeichen eines aktiven Sensors im Vergleich zu einem passiven Sensor ist die Emission von eigenen Signalen, um deren Reflexion in der Umgebung erfassen und analysieren zu können. Eine Kamera beispielsweise ist typischerweise ein passiver Sensor und nimmt in der Umgebung reflektiertes Licht auf, ohne jedoch selbst dieses Licht in Umgebung entsendet zu haben.

Insbesondere bei einem Lidar-System wird typischerweise ein hochfrequentes jedoch diskretes Verhalten angestrebt, indem rasternd ein Lichtimpuls wie ein Laserstrahl in die Umgebung entsendet wird. Die Rasterung erfolgt dadurch, dass beispielsweise durch Drehung des Lidar-Systems eine jeweilige Zeile von Punkten erreicht wird und mit einer vertikalen Veränderung eine jeweilige Spalte. Damit kann eine Matrix von einzelnen Reflexionspunkten erhalten werden, in der jeder einzelne Punkt eine Laufzeit als Zusatzinformation aufweist, um die Entfernung zwischen dem Lidar-System und dem reflektierenden Objekt der Umgebung angeben zu können. Damit kann vorteilhaft ein dreidimensionales Abbild der Umgebung um das Lidar-System erzeugt werden.

Hierbei kann es zu fehlerhaften Punkten kommen, insbesondere aufgrund von Einflüssen wie eingangs beschrieben. Reflexionspunkte können dort erfasst werden, wo keine sein dürften, da kein Objekt in der Umgebung vorhanden ist, das einen zur Laufzeit der erfassten vermeintlichen Reflexion entsprechenden Abstand zum Lidar-System aufweist.

Das Verfahren macht sich dagegen den Effekt zu Nutze, dass solche fehlerhaften Punkte, d.h. die virtuellen Punkte, nicht an einem verdeckenden ersten Objekt reflektiert werden, und somit das erste Objekt in genau dieser Abstrahlrichtung des Lidar-Systems nicht angestrahlt werden kann, um am dahinterliegenden und damit teilweise verdeckten zweiten Objekt einen Schatten zu erzeugen. Der Schatten am zweiten Objekt kann nur dort auftreten, wo die Signale des aktiven Sensors vom davorliegenden ersten Objekt verdeckt werden.

Daher wird zunächst eine Punktewolke ermittelt, die Reflexionen am ersten Objekt und am zweiten Objekt aufweist. Da das erste Objekt zwischen dem aktiven Sensor und dem zweiten Objekt liegt, verdeckt es das zweite Objekt teilweise. Ein Schatten am zweiten Objekt ist in solchen Abstrahl-Richtungen des aktiven Sensors zu verorten, wo das erste Objekt reflektiert und das zweite Objekt nicht.

Virtuelle und damit falsch-positive Reflexionen werden dort erhalten, wo der Schatten des ersten Objekts bereits aufgehört hat und das zweite Objekt Reflexionen liefert, und zwar in einem Bereich, wo vermeintliche Reflexionen, die vermeintlich zum ersten Objekt gehören, ebenfalls erfasst werden. Da Reflexionen vom ersten Objekt und zweiten Objekt naturgemäß sich gegenseitig an ein und derselben Abstrahl-Richtung ausschließen, kann somit die Geometrie des Schattens dazu verwendet werden, um vermeintliche Reflexionen des ersten Objekts dann als falsch auszusortieren, wenn sie außerhalb der auf Grundlage der Geometrie des Schattens ermittelten Referenzgeometrie liegen, und in derselben Abstrahl-Richtung des aktiven Sensors Reflexionen vom zweiten Objekt erhalten werden.

Die Referenzgeometrie als logische Ableitung der Geometrie des Schattens erlaubt Korrekturen und Anpassungen für den Betrieb eines Systems zum Ausführen des Verfahrens. Zwar kann im einfachsten Fall als Referenzgeometrie unverändert die Geometrie des Schattens am zweiten Objekt verwendet werden, insbesondere jedoch durch Größenanpassungen und anderen geometrischen Anpassungen zur Registrierung, insbesondere durch ein Übereinanderlegen relevanter Kanten, kann eine angepasste Geometrie des Schattens auf dem zweiten Objekt ermittelt werden.

Damit sind die virtuellen Punkte bekannt und können aus dem Sensorergebnis entfernt werden. Vorteilhaft sind somit reale Objektdimensionen durch diese Fehlervermeidung zuverlässiger ermittelbar, insbesondere die Abmessungen des nach dieser Nomenklatur genannten ersten Objekts vorderhalb eines zweiten Objekts.

Gemäß einer vorteilhaften Ausführungsform wird eine reduzierte Punktewolke aus der Punktewolke erzeugt, indem virtuelle Punkte aus der Punktewolke entfernt werden, wobei die reduzierte Punktewolke für eine Fahrzeuganwendung verwendet wird.

Die reduzierte Punktewolke entspricht einer korrigierten Punktewolke, sodass insbesondere das erste Objekt in seinen Abmessungen genauer und zuverlässiger erfasst werden kann. Insbesondere Abmessungen von Objekten sind es häufig, die für Fahrzeuganwendungen relevant sind, beispielsweise ein automatisches Fahrsteuerungssystem, welches zum Ausweichen von Hindernissen und allgemein zum Planen von Trajektorien für das eigene Fahrzeug typischerweise ausgelegt ist.

Gemäß einer weiteren vorteilhaften Ausführungsform ist die Referenzgeometrie gleich der Geometrie des Schattens.

Gemäß einer weiteren vorteilhaften Ausführungsform wird die Referenzgeometrie durch Verschiebung und/oder Größenanpassung der Geometrie des Schattens erzeugt, wobei die Größenanpassung abhängig von einem Abstand des ersten Objekts und/oder des zweiten Objekts zum aktiven Sensor ist.

Gemäß einer weiteren vorteilhaften Ausführungsform wird eine Fläche bestimmt, in der sich die virtuellen Punkte mit dem zu den Reflexionen am zweiten Objekt zugehörigen Teil der Punktewolke überlagern, wobei für den Fall, dass die Fläche eine vorgegebene Grenzbedingung überschreitet, eine vorgegebene Fehlermaßnahme eingeleitet wird.

Die Grenzbedingungen kann auf eine absolute Fläche bezogen sein, oder relativ, beispielsweise prozentual zur Oberfläche des ersten Objekts definiert sein.

Gemäß einer weiteren vorteilhaften Ausführungsform umfasst die Fehlermaßnahme eine Reduzierung der Leistung des emittierten Signals des aktiven Sensors. Vorzugsweise wird dabei die emittierte Signalleistung nur im Bereich des ersten Objektes reduziert, um weiterhin die Detektionsreichweite im Umfeld zu gewährleisten. Im Bereich des ersten Objektes ist dahingehend zu verstehen, dass die auf das erste Objekt gerichteten Signale vorzugsweise die auf den Randbereich gerichteten Signale reduziert werden. Der Randbereich definiert sich hierbei über die Außenkontur des ersten Objektes und einen sich an die Außenkontur anschließenden Bereich vorgegebener Breite beidseitig der Außenkontur oder zumindest einem dem Objektmittelpunkt zugewandten Bereich vorgegebener Breite.

Durch die Verringerung der Leistung des aktiven Sensorsystems kann insbesondere bei der Verwendung eines Lidar-Systems das Entstehen von Blooming-Effekten verringert werden, insbesondere wenn es sich bei dem ersten Objekt um ein hochreflektierendes Objekt handelt.

Gemäß einer weiteren vorteilhaften Ausführungsform umfasst die Fehlermaßnahme eine Aktivierung einer Reinigungsvorrichtung des aktiven Sensors.

Die Reinigungsvorrichtung des aktiven Sensors kann unter Zuhilfenahme von Wasser und/oder Luft und/oder einer Gummilippe etwaigen Schmutz oder Nässe vom aktiven Sensor entfernen.

Gemäß einer weiteren vorteilhaften Ausführungsform wird eine Leistung des emittierten Signals des aktiven Sensors in Abhängigkeit eines Abstands des ersten Objekts und/oder des zweiten Objekts zum aktiven Sensor angepasst.

Gemäß einer weiteren vorteilhaften Ausführungsform wird nur dann die Leistung angepasst, wenn der Abstand des ersten Objekts und/oder des zweiten Objekts zum aktiven Sensor unter einem vorgegebenen Grenzwert liegt.

Je weiter reflektierende Objekte vom aktiven Sensor entfernt sind, desto geringer ist die Notwendigkeit einer Anpassung, da sich Blooming-Effekte nur für Fahrmanöver mit geringem Abstand zu Objekten (Parken, Rangieren, Ausweichen) besonders nachteilig auswirken.

Ein weiterer Aspekt der Erfindung betrifft ein System für ein Fahrzeug zum Ermitteln von fehlerhaften Sensorergebnissen eines aktiven Sensors des Fahrzeugs in einer Situation, in der vom aktiven Sensor ein erstes Objekt angestrahlt wird und ein durch das erste Objekt zumindest teilweise von der Anstrahlung des aktiven Sensors verdecktes zweites Objekt angestrahlt wird, aufweisend eine Recheneinheit und den aktiven Sensor, wobei die Recheneinheit dazu ausgeführt ist, ein Verfahren gemäß vorhergehender Beschreibung durzuführen._

Sind die virtuellen Punkte klassifiziert und damit identifiziert, so können diese in der weiteren Verarbeitungen verworfen werden, beispielsweise zur Nutzung der Punktewolke durch ein Fahrerassistenzsystem.

Vorteile und bevorzugte Weiterbildungen des vorgeschlagenen Systems ergeben sich durch eine analoge und sinngemäße Übertragung der im Zusammenhang mit dem vorgeschlagenen Verfahren vorstehend gemachten Ausführungen.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist.

Es zeigen:
- Fig. 1:: Eine beispielhafte Situation mit einem ersten Objekt, das ein zweites Objekt teilweise verdeckt.
- Fig. 2:: Einen ersten Teil eines Verfahrens zum Ermitteln von fehlerhaften Sensorergebnissen eines aktiven Sensors in der Situation der Fig. 1 gemäß einem Ausführungsbeispiel der Erfindung.
- Fig. 3:: Einen zweiten Teil des Verfahrens nach dem Teil der Fig. 2.

Die Darstellungen in den Figuren sind schematisch und nicht maßstäblich.

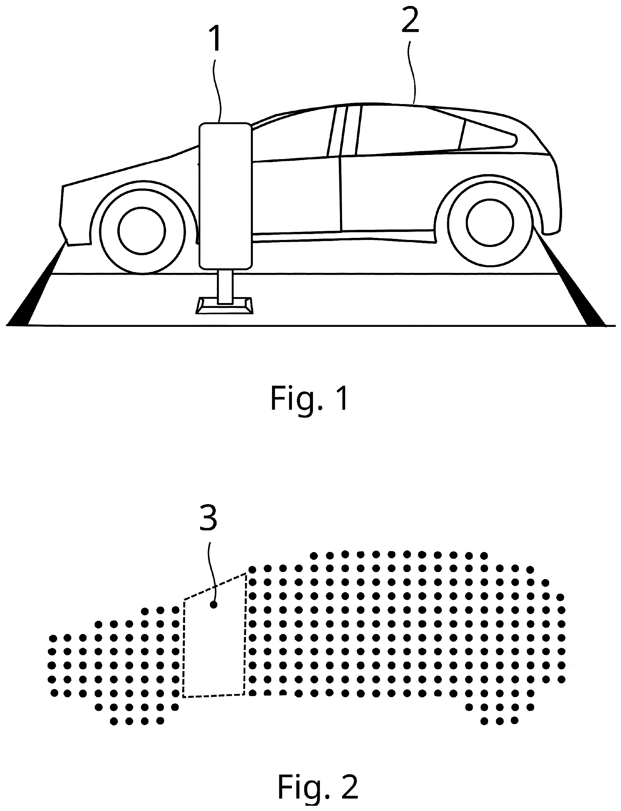

Fig. 1 zeigt eine beispielhafte Situation mit einem ersten Objekt 1 und einem zweiten Objekt 2. Das erste Objekt 1 ist eine Warnbake, während das zweite Objekt 2 ein dahinter stehendes Fahrzeug ist. Das erste Objekt 1 verdeckt Teile des zweiten Objekts 2. In der Fig. 1 ist dabei eine Situation gezeigt, wie sie aus Sicht eines aktiven Sensors erfasst werden kann. Wird als aktiver Sensor ein Lidar-System verwendet, welches Lichtimpulse über eine Vielzahl von Abstrahl- Richtungen aussendet, so werden Reflexionen des ausgesendeten Lichts am ersten Objekt 1 und am zweiten Objekt 2 auftreten, die vom aktiven Sensor selbst wiederum erfasst werden können, wobei durch Bestimmung der Laufzeit der ausgesendeten Lichtsignale eine jeweilige Entfernung in einer jeweiligen Abstrahl-Richtung ermittelt werden kann. Damit kann eine Punktewolke von Reflexionen mit jeweiligen zugeordneten Informationen zu den Entfernungen der Reflexionen erzeugt werden. Zum Ermitteln von fehlerhaften Sensorergebnissen des aktiven Sensors in dieser Situation erfolgt ferner das Bestimmen einer Geometrie eines Schattens 3 in dem zu den Reflexionen am zweiten Objekt 2 zugehörigen Teil der Punktewolke, vgl. hierzu Fig. 2.

Fig. 2 zeigt die Reflexionen am zweiten Objekt 2 als Teil der Punktewolke. Während die Punktewolke auch aus Reflexionen am ersten Objekt 1 gebildet wird, ist zur Veranschaulichung lediglich der Anteil der Punktewolke gezeigt, der aus den Reflexionen am zweiten Objekt 2 entsteht. Hierbei wird jedoch das zweite Objekt 2 teilweise abgedeckt durch das erste Objekt 1, welches bereits Signale des aktiven Sensors reflektiert und somit nicht zum zweiten Objekt 2 lässt. Es findet somit eine Abschattung eines Teils des zweiten Objekts 2 statt. Die Geometrie des Schattens 3 wird ermittelt. Aus dieser Geometrie des Schattens 3 kann durch Größenanpassung und durch ein Matching mittels Übereinanderlegung relevanter Kanten eine Referenzgeometrie ermittelt werden.

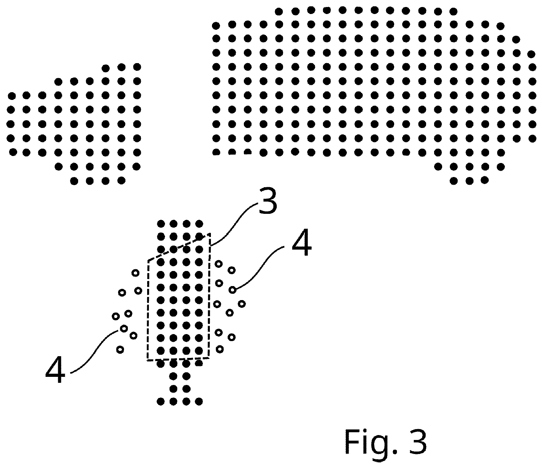

Fig. 3 zeigt weitere Abläufe zur Durchführung des Verfahrens zum Ermitteln von fehlerhaften Sensorergebnissen des aktiven Sensors in der Situation der Fig. 1. Nachdem die Referenzgeometrie wie unter Fig. 2 beschrieben ermittelt wurde, kann eine Klassifizierung von außerhalb der Referenzgeometrie liegenden Punkten aus dem zu den Reflexionen am ersten Objekt 1 zugehörigen Teil der Punktewolke als virtuelle Punkte 4 erfolgen. In der Fig. 3 sind der Einfachheit halber nur zwei aus der Vielzahl von virtuellen Punkten 4 als solche bezeichnet. Zwar liegen weitere Reflexionen als Punkte außerhalb der Referenzgeometrie, welche auf der Geometrie des Schattens 3 basiert, diese sind jedoch tatsächliche Reflexionen am ersten Objekt 1. Während die tatsächlichen Reflexionen am ersten Objekt 1 außerhalb der Referenzgeometrie kein Pendant am zweiten Objekt 2 aufweisen, ist genau dies bei den virtuellen Punkten 4 der Fall. Diese zeichnen sich dadurch aus, dass außerhalb der Geometrie des Schattens 3 am zweiten Objekt 2 ebenfalls Reflexionen erhalten werden. Da die zurückgestrahlte Leistung der Reflexionen am zweiten Objekt 2 in diesem Bereich höher ist als die der virtuellen Punkte 4, erkennt man die tatsächliche Breite des davorstehenden ersten Objekts 1 im Schattenwurf. Somit sind im vorliegenden Beispiel die Punkte der Punktewolke außerhalb der Referenzgeometrie, welche zunächst dem ersten Objekt 1 zugeordnet werden, jedoch virtuelle Punkte 4 sind, links und rechts der Referenzgeometrie, und nicht oberhalb oder unterhalb der Referenzgeometrie, da nur links und rechts der Referenzgeometrie auch Reflexionen am zweiten Objekt 2 erhalten werden. Es wird daher das Phänomen ausgenutzt, dass das erste Objekt 1 einerseits durch dessen Reflexionen erfasst werden kann, andererseits dessen Schatten am zweiten Objekt 2 ebenfalls Informationen über das erste Objekt 1 liefert.

Obwohl die Erfindung im Detail durch bevorzugte Ausführungsbeispiele näher illustriert und erläutert wurde, ist die Erfindung nicht durch die offenbarten Beispiele eingeschränkt und andere Variationen können vom Fachmann hieraus abgeleitet werden. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen, beispielsweise hinsichtlich der Funktion oder der Anordnung einzelner, in einer beispielhaften Ausführungsform genannter Elemente, vornehmen kann. Der Schutzbereich wird durch die Ansprüche definiert.

## Patentansprüche

1. Computerimplementiertes Verfahren zum Ermitteln von fehlerhaften Sensorergebnissen eines aktiven
Sensors in einer Situation, in der vom aktiven Sensor ein erstes Objekt (1) angestrahlt wird und ein durch das erste Objekt (1) zumindest teilweise von der Anstrahlung des aktiven Sensors verdecktes zweites Objekt (2) angestrahlt wird, aufweisend die Schritte:
- Ermitteln einer Punktewolke aus am ersten Objekt (1) und am zweiten Objekt (2) auftretenden Reflexionen der vom aktiven Sensor zur Anstrahlung emittierten Signale;
- Bestimmen einer Geometrie eines Schattens (3) in dem zu den Reflexionen am zweiten Objekt (2) zugehörigen Teil der Punktewolke;
- Ermitteln einer Referenzgeometrie auf Basis der Geometrie des Schattens (3); **gekennzeichnet durch** den Schritt:
- Klassifizieren von außerhalb der Referenzgeometrie liegenden Punkten aus dem zu den Reflexionen am ersten Objekt (1) zugehörigen Teil der Punktewolke als virtuelle Punkte (4), wobei ein Punkt als virtuell klassifiziert wird, wenn
(i) er außerhalb der Referenzgeometrie liegt, und
(ii) in derselben Abstrahl-Richtung, in der der Punkt erfasst wurde, eine Reflexion am zweiten Objekt (2) auftritt.

2. Verfahren nach Anspruch 1,
wobei eine reduzierte Punktewolke aus der Punktewolke erzeugt wird indem die als virtuelle Punkte (4) klassifizierten Punkte aus der Punktewolke entfernt werden, wobei die reduzierte Punktewolke für eine Fahrzeuganwendung verwendet wird.

3. Verfahren nach einem der Ansprüche 1 bis 2,
wobei die Referenzgeometrie gleich der Geometrie des Schattens (3) ist.

4. Verfahren nach einem der Ansprüche 1 bis 2,
wobei die Referenzgeometrie durch Verschiebung und/oder Größenanpassung der Geometrie des Schattens (3) erzeugt wird, wobei die Größenanpassung abhängig von einem Abstand des ersten Objekts (1) und/oder des zweiten Objekts (2) zum aktiven Sensor ist.

5. Verfahren nach einem der vorhergehenden Ansprüche,
wobei eine Fläche bestimmt wird, in der sich die virtuellen Punkte (4) mit dem zu den Reflexionen am zweiten Objekt (2) zugehörigen Teil der Punktewolke überlagern, wobei für den Fall, dass die Fläche eine vorgegebene Grenzbedingung überschreitet, eine vorgegebene Fehlermaßnahme eingeleitet wird.

6. Verfahren nach Anspruch 5,
wobei die Fehlermaßnahme eine Reduzierung der Leistung des emittierten Signals des aktiven Sensors umfasst.

7. Verfahren nach einem der Ansprüche 5 oder 6,
wobei die Fehlermaßnahme eine Aktivierung einer Reinigungsvorrichtung des aktiven Sensors umfasst.

8. Verfahren nach einem der vorhergehenden Ansprüche,
wobei eine Leistung des emittierten Signals des aktiven Sensors in Abhängigkeit eines Abstands des ersten Objekts (1) und/oder des zweiten Objekts (2) zum aktiven Sensor angepasst wird.

9. Verfahren nach Anspruch 8,
wobei nur dann die Leistung angepasst wird, wenn der Abstand des ersten Objekts (1) und/oder des zweiten Objekts (2) zum aktiven Sensor unter einem vorgegebenen Grenzwert liegt.

10. System für ein Fahrzeug zum Ermitteln von fehlerhaften Sensorergebnissen eines aktiven Sensors des Fahrzeugs in einer Situation, in der vom aktiven Sensor ein erstes Objekt (1) angestrahlt wird und ein durch das erste Objekt (1) zumindest teilweise von der Anstrahlung des aktiven Sensors verdecktes zweites Objekt (2) angestrahlt wird, aufweisend eine Recheneinheit und den aktiven Sensor, **wobei die Recheneinheit dazu ausgeführt ist, ein Verfahren nach einem der Ansprüche 1 bis 9 durchzuführen.**

## Claims

1. Computer-implemented method for ascertaining erroneous sensor results of an active sensor in a situation in which a first object (1) is illuminated by the active sensor and a second object (2) which is at least partially obscured from the illumination of the active sensor by the first object (1) is illuminated, comprising the steps of:
- ascertaining a point cloud from reflections occurring at the first object (1) and at the second object (2) of the signals emitted by the active sensor for illumination;
- determining a geometry of a shadow (3) in the part of the point cloud associated with the reflections at the second object (2);
- ascertaining a reference geometry on the basis of the geometry of the shadow (3); **characterized by** the step of:
- classifying points lying outside the reference geometry from the part of the point cloud associated with the reflections at the first object (1) as virtual points (4), a point being classified as virtual if
(i) it lies outside the reference geometry, and
(ii) in the same direction of radiation in which the point was detected, a reflection occurs at the second object (2).

2. Method according to claim 1,
wherein a reduced point cloud is generated from the point cloud by the points classified as virtual points (4) being removed from the point cloud, wherein the reduced point cloud is used for a vehicle application.

3. Method according to any of claims 1 to 2,
wherein the reference geometry is equal to the geometry of the shadow (3).

4. Method according to any of claims 1 to 2,
wherein the reference geometry is generated by shifting and/or resizing the geometry of the shadow (3), wherein the resizing depends on a distance of the first object (1) and/or of the second object (2) from the active sensor.

5. Method according to any of the preceding claims,
wherein an area is determined in which the virtual points (4) overlap with the part of the point cloud associated with the reflections at the second object (2), wherein a predetermined error correction measure is initiated in the event that the area exceeds a predetermined limit condition.

6. Method according to claim 5,
wherein the error correction measure includes a reduction in the power of the emitted signal of the active sensor.

7. Method according to any of claims 5 or 6,
wherein the error correction measure includes activating a cleaning device of the active sensor.

8. Method according to any of the preceding claims,
wherein the power of the emitted signal of the active sensor is adjusted depending on a distance of the first object (1) and/or of the second object (2) from the active sensor.

9. Method according to claim 8,
wherein the power is only adjusted if the distance of the first object (1) and/or of the second object (2) from the active sensor is below a predetermined limit value.

10. System for a vehicle for ascertaining erroneous sensor results of an active sensor of the vehicle in a situation in which a first object (1) is illuminated by the active sensor and a second object (2) which is at least partially obscured from the illumination of the active sensor by the first object (1) is illuminated, comprising a computing unit and the active sensor, **wherein the computing unit is configured to perform a method according to any of claims 1 to 9.**

## Revendications

1. Procédé mis en œuvre par ordinateur, permettant de déterminer des relevés de capteur erronés d'un capteur actif dans une situation dans laquelle un premier objet (1) est éclairé par le capteur actif et un second objet (2), au moins partiellement masqué par le premier objet (1) du fait de l'éclairage du capteur actif, est éclairé, présentant les étapes suivantes :
- détermination d'un nuage de points à partir des réflexions, sur le premier objet (1) et sur le second objet (2), des signaux émis par le capteur actif pour l'éclairage ;
- établissement d'une géométrie d'une ombre (3) dans la partie du nuage de points correspondant aux réflexions sur le second objet (2) ;
- détermination d'une géométrie de référence à partir de la géométrie de l'ombre (3) ; **caractérisée par** l'étape :
- classification, en tant que points virtuels (4), de points situés en dehors de la géométrie de référence, lesquels sont issus de la partie du nuage de points correspondant aux réflexions sur le premier objet (1), dans lequel un point est classé comme virtuel
(i) lorsqu'il se trouve en dehors de la géométrie de référence, et
(ii) lorsqu'une réflexion se produit sur le second objet (2) dans la même direction de rayonnement que celle dans laquelle le point a été détecté.

2. Procédé selon la revendication 1,
dans lequel un nuage de points réduit est généré à partir du nuage de points en supprimant du nuage de poins les points classifiés comme points virtuels (4), dans lequel le nuage de points réduit est utilisé dans le cadre d'une application automobile.

3. Procédé selon l'une des revendications 1 à 2,
dans lequel la géométrie de référence est identique à la géométrie de l'ombre (3).

4. Procédé selon l'une des revendications 1 à 2,
dans lequel la géométrie de référence est générée par translation et/ou redimensionnement de la géométrie de l'ombre (3), dans lequel le redimensionnement dépend d'une distance entre le premier objet (1) et/ou le second objet (2) et le capteur actif.

5. Procédé selon l'une des revendications précédentes,
dans lequel il est établi une surface dans laquelle les points virtuels (4) se superposent à la partie du nuage de points correspondant aux réflexions sur le second objet (2), dans lequel une mesure corrective prédéfinie est mise en œuvre dans le cas où la surface dépasse une condition limite prédéfinie.

6. Procédé selon la revendication 5,
dans lequel la mesure corrective comprend une réduction de la puissance du signal émis par le capteur actif.

7. Procédé selon l'une des revendications 5 ou 6,
dans lequel la mesure corrective comprend une activation d'un dispositif de nettoyage du capteur actif.

8. Procédé selon l'une des revendications précédentes,
dans lequel la puissance du signal émis par le capteur actif est ajustée en fonction d'une distance entre le premier objet (1) et/ou le second objet (2) et le capteur actif.

9. Procédé selon la revendication 8,
dans lequel la puissance n'est ajustée que si la distance entre le premier objet (1) et/ou le second objet (2) et le capteur actif est inférieure à une valeur limite prédéfinie.

10. Système pour un véhicule, permettant de déterminer des relevés de capteur erronés d'un capteur actif du véhicule dans une situation dans laquelle un premier objet (1) est éclairé par le capteur actif et un second objet (2), au moins partiellement masqué par le premier objet (1) du fait de l'éclairage du capteur actif, est éclairé, présentant une unité de traitement et le capteur actif, **dans lequel l'unité de traitement est conçue pour exécuter un procédé selon l'une des revendications 1 à 9.**
